# EUROPÄISCHE PATENTANMELDUNG

(11) **EP 4 599 659 A1**
(43) Veröffentlichungstag der Anmeldung: **13.08.2025**
(21) Anmeldenummer: 25151429.5
(22) Anmeldetag: 13.01.2025
(51) Int. Cl.: A01D 34/66

(54) **LANDWIRTSCHAFTLICHE MÄHMASCHINE**

(30) Priorität: 06.02.2024 DE 102024103251
(71) Anmelder: Pöttinger Landtechnik GmbH, 4710 Grieskirchen (AT)
(72) Erfinder: GREIFENEDER, August, 4710 Grieskirchen (AT); REININGER, Markus, 4710 Grieskirchen (AT); DIETACHMAIR, Andreas, 4710 Grieskirchen (AT); ANGLEITNER, Norbert, 4710 Grieskirchen (AT)
(74) Vertreter: Thoma, Michael

(57) **Zusammenfassung**

Die vorliegende Erfindung betrifft eine landwirtschaftliche Mähmaschine zum Anbau an einen Schlepper, mit einem Scheibenmähwerk, das an einem Maschinenrahmen aufgehängt ist und einen Mähbalken, der sich in Arbeitsstellung liegend quer zur Fahrtrichtung erstreckt, sowie mit Messern bestückte Mähscheiben umfasst, die nebeneinander aufgereiht am Mähbalken um aufrechte Drehachsen drehbar gelagert sind, wobei ein Antriebsstrang zum rotatorischen Antreiben der Mähscheiben am Mähbalken angeordnete Antriebsräder, vorzugsweise in Form miteinander in Wälzeingriff stehender Stirnräder, aufweist, wobei der Mähbalken an zumindest einem Ende einen bezüglich der Fahrtrichtung nach vorne abknickenden und/oder nach vorne gebogenen äußeren Balkenendabschnitt aufweist, an dem zumindest eine Mähscheibe gelagert ist, die gegenüber den Mähscheiben an einem Mittelabschnitt des Mähbalkens in Fahrtrichtung nach vorne versetzt angeordnet und mit einer aufrechten Fördertrommel zur Schnittgutförderung zur Mähbalkenmitte hin versehen ist.

## Beschreibung

Die vorliegende Erfindung betrifft eine landwirtschaftliche Mähmaschine zum Anbau an einen Schlepper, mit einem Scheibenmähwerk, das an einem Maschinenrahmen aufgehängt ist und einen Mähbalken, der sich in Arbeitsstellung liegend quer zur Fahrtrichtung erstreckt, sowie mit Messern bestückte Mähscheiben umfasst, die nebeneinander aufgereiht am Mähbalken um aufrechte Drehachsen drehbar gelagert sind, wobei ein Antriebsstrang zum rotatorischen Antreiben der Mähscheiben am Mähbalken angeordnete Antriebsräder, vorzugsweise in Form miteinander in Wälzeingriff stehender Stirnräder, aufweist.

Solche Scheibenmähwerke besitzen üblicherweise im Bereich des Mähbalkens eine in der Höhe flache Bauweise, da der Antrieb der Mähscheiben - im Gegensatz zu Trommelmähern - durch einen untenliegenden, am Mähbalken entlanggeführten Antriebsstrang erfolgt. Insbesondere kann der untenliegende, am Mähbalken entlanggeführte Antriebsstrang eine Kette von Stirnrädern aufweisen, die miteinander in Wälzeingriff stehen, sodass die Antriebsbewegung entlang des Mähbalkens von Mähscheibe zu Mähscheibe erfolgt und sich ein untenliegender Kraft- bzw. Drehmomentfluss entlang des Mähbalkens ergibt. Die flache Bauweise lässt das geschnittene Gut einfach über den Mähbalken gleiten, wodurch sich der Fahrtwiderstand verringert und auch eine Zusammenarbeit mit nachgeordneten Konditionierern vereinfacht.

Gleichzeitig ergibt sich auch eine leichtbauende Konstruktion, die eine große Arbeitsbreite gestattet.

Ein solches Scheibenmähwerk zeigt beispielsweise die EP 19 32 414 B1, wobei dort für den Straßentransport die Breite des Mähbalkens reduziert werden kann, indem die äußersten Mähscheiben um liegende, fahrtrichtungsparallele Schwenkachsen nach oben geklappt werden können.

Bei solchen Scheibenmähwerken mit großen Arbeitsbreiten von z.B. mehr als 3m tritt häufig das Problem auf, dass der aus der Mäharbeit gebildete Mähschwad zu breit abgelegt wird. Hierdurch kann z.B. bei einem Frontmähwerk ein Teil des Mähschwads von den vorderen und hinteren Reifen des Schleppers überrollt werden. Auch bei heckseitig angebauten Mähwerken kann der gebildete Mähschwad zu breit sein, beispielsweise um das gemähte Gut verlässlich an ein vorhandenes Folgeaggregat wie beispielsweise einen Konditionierer oder Querförderer zu übergeben, was insbesondere bei schrägen Hangfahrten ein Problem darstellen kann.

Um die Breite des vom Mähbalken geschnittenen Mähschwads zu verkleinern bzw. die randseitig geschnittenen Abschnitte mehr zum Zentrum hin zu dirigieren, werden bisweilen sogenannte Schwadscheiben verwendet, die heckseitig hinter dem Mähbalken herlaufend angeordnet sind und sich selbst durch Bodenkontakt antreiben können, wobei die Drehachse solcher Schwadscheiben üblicherweise liegend, spitzwinklig zur Fahrtrichtung geneigt ausgerichtet ist. Um eine größere Zentrierwirkung zu haben bzw. den Schwad stärker zu verschmälern, können solche Schwadscheiben in doppelter Anordnung vorgesehen werden, das heißt auf jeder Mähwerksseite rechts und links zwei hintereinander versetzt angeordnete Schwadscheiben. Bei einer solchen doppelten Anordnung können jedoch Probleme mit dem Futterfluss an der hinteren Schwadscheibe und damit Verstopfungen auftreten, insbesondere beim Mähen in Schichtlinien entlang schräger Hangflanken oder auch beim Bergauf- und Bergabmähen.

Um solche Probleme von Schwadscheiben zu vermeiden, wurden auch bereits andere Maßnahmen zur Schwadbildung vorgeschlagen, beispielsweise in Form von angetriebenen Schwadformern oder Querförderschnecken, die an den äußeren Randabschnitten des Mähbalkens heckseitig angeordnet werden können. Solche Querförderschnecken erhöhen jedoch das Gewicht und die Baulänge des Mähwerks deutlich, was auch für Walzen- oder Zinkenaufbereiter gilt, die mit Querförderbändern oder Schwadleitblechen versehen werden und heckseitig vom Mähbalken angeordnet werden können.

Um eine Querförderwirkung auf das Schnittgut bereits am Mähbalken selbst zu erzielen, sodass bestenfalls auf nachgeordnete Querfördermittel wie die genannten Schwadscheiben oder Querförderschnecken verzichtet werden kann, wurde bereits vorgeschlagen, auf die beiden äußersten Mähscheiben turmartige Fördertrommeln zu setzen, die mit den Mähscheiben mitrotieren und das an der Vorderkante des Mähbalkens geschnittene Halm- und Blattgut nicht einfach über den Mähbalken hinweglaufen lassen, sondern zur Innenseite hin, d.h. auf die Mähbalkenmitte zu, treiben. Das an der Mähbalkenvorderkante geschnittene Gut, das an sich bezogen auf die Fahrtrichtung gerade nach hinten strömen möchte, trifft auf die jeweilige Fördertrommel, wobei die Rotation der Fördertrommel dafür sorgt, dass das Erntegut nicht gleichmäßig rechts und links an der Fördertrommel vorbeiströmt, sondern zu einer Seite hin getrieben wird. Dabei werden die beiden äußersten, mit den genannten Fördertrommeln bestückten Mähscheiben nicht gegensinnig zueinander angetrieben, wie dies an sich für die inneren Mähscheiben bzw. die nicht mit Fördertrommeln bestückten Mähscheiben üblich ist, sondern gleichsinnig angetrieben derart, dass die frontseitigen Fördertrommelabschnitte nach innen zum Zentrum des Mähbalkens hin laufen und das Erntegut nach innen treiben.

Solche Fördertrommeln auf den äußersten Mähscheiben eines Mähbalkens können zwar die genannten Platz- und Gewichtsprobleme der zuvor genannten Folgewerkzeuge zur Schwadbildung wie Querförderschnecken, Querförderbänder oder Schwadscheiben vermeiden, sind jedoch besonders sensibel, was eine verlässliche Querförderwirkung bei schwierigen Mähverhältnissen anbelangt, da das geschnittene Futter von der äußersten Fördertrommel quer zur Fahrtrichtung über die zweitäußerste Fördertrommel in Richtung Mitte transportiert werden muss, um tatsächlich eine Verjüngung des abgelegten Mähschwads zu erzielen. Insbesondere beim Mähen entlang von Schichtlinien auf schrägen Hangflächen neigen die talabwärts positionierten Fördertrommeln dazu, dass Schnittgut nicht mehr ausreichend bergwärts zu fördern, wobei insbesondere die Übergabe des Schnittguts von der äußersten Fördertrommel auf die zweitäußerste Fördertrommel am talabwärts liegenden Ende des Mähbalkens nicht mehr richtig klappt und das Schnittgut zumindest teilweise zwischen den beiden Fördertrommeln hindurchläuft. Ähnliche Probleme treten auch beim Bergabmähen auf, da das Schnittgut dazu neigt, bergabwärts zu fallen bzw. nicht mehr mit ausreichender Kraft auf die bergabwärts gerichtete Frontseite der Fördertrommel trifft, sodass die Querförderwirkung an der Frontseite der Fördertrommel zu schwach wird, um das Schnittgut verlässlich nach innen bzw. zur Mitte des Mähbalkens hin zu treiben.

Der vorliegenden Erfindung liegt daher die Aufgabe zugrunde, eine verbesserte landwirtschaftliche Mähmaschine der genannten Art zu schaffen, die Nachteile des Standes der Technik vermeidet und letzteren in vorteilhafter Weise weiterbildet. Insbesondere soll auch bei schwierigen Mähverhältnissen an geneigten Hängen mit Abwärts- oder Schrägfahrten verläßlich ein gegenüber der Arbeitsbreite des Mähwerks verschmälerter Mähschwad ohne Störungen des Schnittgutflusses erreicht und eine kompakte, schmale und leichte Bauweise möglicher nachgeordneter Folgeaggregate wie Konditionierer und Querförderer ermöglicht werden.

Erfindungsgemäß wird die genannte Aufgabe durch eine landwirtschaftliche Mähmaschine gemäß Anspruch 1 gelöst. Bevorzugte Ausgestaltungen der Erfindung sind Gegenstand der abhängigen Ansprüche.

Es wird also vorgeschlagen, die äußerste Mähscheibe des Mähbalkens mit einer Fördertrommel zu versehen und nach vorne zu versetzen, um der auf der äußersten Mähscheibe angeordneten Fördertrommel das Fördern des Schnittguts nach innen zur Balkenmitte hin zu erleichtern bzw. dem nach innen zu fördernden Schnittgut mehr Zeit zu geben, um nach innen zu gelangen, bevor das Schnittgut sich mit dem weiter innen geschnittenen Schnittgut zu einem Mähschwad vereinigen muss. Erfindungsgemäß besitzt der Mähbalken an zumindest einem Ende einen bezüglich der Fahrtrichtung nach vorne abknickenden und/oder nach vorne gebogenen äußeren Balkenendabschnitt, an dem zumindest eine Mähscheibe gelagert ist, die gegenüber den Mähscheiben an einem Mittelabschnitt des Mähbalkens nach vorne versetzt angeordnet und mit einer aufrechten Fördertrommel zur Schnittgutförderung zur Mähbalkenmitte hin versehen ist. Die genannte Fördertrommel kann koaxial zur aufrechten Drehachse der Mähscheibe positioniert sein und gleichsinnig mit der Mähscheibe rotieren derart, dass ein, bezogen auf die bestimmungsgemäße Fahrtrichtung, vorderer Abschnitt der rotierenden Fördertrommel sich quer zur Fahrtrichtung nach innen zur Mähbalkenmitte hin bewegt. Durch den nach vorne abknickenden Endabschnitt des Mähbalkens und die nach vorne versetzte Position der äußersten Mähscheibe des Mähbalkens sowie der darüber angeordneten Fördertrommel wird das Erntegut am äußeren Mähbalkenende früher bzw. weiter vorne geschnitten als an einem weiter innen liegenden Mähbalkenabschnitt, sodass das Schnittgut von der Fördertrommel der äußersten Mähscheibe leichter nach innen getrieben und effektiver mit dem weiter innen geschnittenen Mähgut zu einem insgesamt verjüngten Mähschwad vereint werden kann.

Vorzugsweise ist auch die zu der genannten äußersten Mähscheibe benachbarte, zweitäußerste Mähscheibe mit einer aufrechten Fördertrommel versehen, die in ähnlicher Weise koaxial zur aufrechten Rotationsachse "ihrer" zweitäußersten Mähscheibe positioniert und damit gleichsinnig rotieren kann. Vorzugsweise rotieren diese beiden benachbarten, äußersten Mähscheiben des Mähbalkens und dementsprechend auch die zugehörigen Fördertrommeln gleichsinnig, sodass die vorderen Trommelabschnitte beider Fördertrommeln jeweils nach innen zur Mähbalkenmitte hin laufen und dementsprechend das Schnittgut gemeinsam zur Mähbalkenmitte hin treiben. Die Gleichsinnigkeit der Drehrichtungen der äußeren, mit Fördertrommel versehenen Mähscheiben des Mähbalkens kann insofern abweichen von der Ungleichsinnigkeit der Drehrichtungen der Mähscheiben an einem Mittelabschnitt des Mähbalkens. Dort, das heißt an einem Mittelabschnitt des Mähbalkens können die Mähscheiben abwechselnd in entgegengesetzte Drehrichtungen angetrieben werden, sodass jeweils zueinander benachbarte Mähscheiben gegensinnig laufen.

Die genannte zweitäußerste Mähscheibe und die zugehörige Fördertrommel können ebenfalls an dem genannten nach vorne abknickenden und/oder nach vorne gebogenen Balkenendabschnitt positioniert sein und gegenüber den am Mittelabschnitt des Mähbalkens angeordneten Mähscheiben nach vorne versetzt sein.

Alternativ können die genannte zweitäußerste Mähscheibe und die zugehörige Fördertrommel aber auch, in Fahrtrichtung betrachtet, auf gleicher Höhe mit den Mähscheiben des Mittelabschnitts des Mähbalkens angeordnet sein. Insbesondere kann die zweitäußerste Mähscheibe und die zugehörige Fördertrommel mit den Mähscheiben des Mittelabschnitts des Mähbalkens entlang einer virtuellen liegenden Geraden aufgereiht sein, die sich quer zur Fahrtrichtung erstreckt, wobei insbesondere die aufrechten Rotationsachen der Mähscheiben entlang dieser Geraden aufgereiht sein können.

Unabhängig von einem möglichen Versatz der zweitäußersten Mähscheibe gegenüber den Mähscheiben des Mittelabschnitts des Mähbalkens nach vorne, sind vorteilhafterweise die äußerste Mähscheibe und die benachbarte zweitäußerste Mähscheibe sowie die jeweils zugehörigen Fördertrommeln vorteilhafterweise zueinander in Fahrtrichtung versetzt angeordnet, wobei die alleräußerste Mähscheibe nebst zugehöriger Fördertrommel gegenüber der zweitäußersten Mähscheibe nebst Fördertrommel in Fahrtrichtung nach vorne versetzt angeordnet ist, um die Übergabe des Schnittguts von der äußersten Fördertrommel auf die benachbarte, weiter innenliegende Fördertrommel zu erleichtern und zu vermeiden, dass Schnittgut zwischen den beiden benachbarten Fördertrommeln hindurchläuft, und zwar insbesondere bei schrägen Hangfahrten oder beim Bergabmähen oder ähnlich schwierigen Mähbedingungen, bei denen sich die Fördertrommeln auf den Mähscheiben herkömmlicherweise schwertun, das Schnittgut verlässlich nach innen zur Balkenmitte hin zu fördern.

Die genannte zweitäußerste Mähscheibe nebst zugehöriger Fördertrommel muss aber nicht auf dem genannten nach vorne abknickenden und/oder nach vorne gebogenen Balkenendabschnitt angeordnet sein, sondern kann auch auf dem sich quer zur Fahrtrichtung erstreckenden, üblicherweise geraden Mittelabschnitt des Mähbalkens angeordnet sein. Insbesondere kann die genannte zweitäußerste Mähscheibe nebst Fördertrommel im Übergangsbereich des Mähbalkens zwischen dessen nach vorne abknickenden und/oder nach vorne gebogenen äußeren Endabschnitt und dem angrenzenden Mittelabschnitt, der gerade ausgebildet sein bzw. eine gerade Längsachse haben kann, positioniert sein.

Der Versatz in Fahrtrichtung der beiden äußersten, mit Fördertrommeln bestückten Mähscheiben kann in Weiterbildung der Erfindung im Bereich von 25% bis 75% oder 30% bis 60% oder 30% bis 50% des Abstands der Drehachsen der beiden äußersten Mähscheiben oder auch der Drehachsen zweier benachbarten Mähscheiben am inneren bzw. mittleren Mähbalkenabschnitt betragen. Der Achsabstand der Drehachsen der beiden äußersten Mähscheiben kann im Wesentlichen gleich zum Abstand der Drehachsen benachbarter Mähscheiben am Mittelabschnitt des Mähbalkens sein, wobei in Weiterbildung der Erfindung alle Mähscheiben hinsichtlich ihrer Rotationsachsen gleichmäßig voneinander beabstandet sein können bzw. die Achsabstände jeweils benachbarter Mähscheiben für alle Mähscheiben zumindest näherungsweise derselbe sein kann.

Unabhängig vom genannten Drehachsenabstand bzw. dem darauf bezogenen Versatz in Fahrtrichtung kann der genannte äußere nach vorne abknickende und/oder nach vorne gebogene Balkenendabschnitt bezogen auf den Mittelabschnitt des Mähbalkens stumpfwinklig nach vorne geneigt sein, wobei die Längsachse des nach vorne abknickenden Balkenendabschnitts und die Längsachse des Mittelabschnitts des Mähbalkens zueinander einen Winkel im Bereich von etwa 140° bis 170° oder 145° bis 165° oder 150° bis 160° einschließen können. Ist der genannte äußere Balkenendabschnitt gebogen, kann der genannte Winkel von einer Tangente zum gebogenen Endabschnitt und der Längsachse des Mittelabschnitts definiert werden bzw. von einer virtuellen Linie, die die Rotationsachsen der beiden äußersten Mähscheiben verbindet, und einer virtuellen Linie, die zumindest durch einige der Rotationsachsen der Mähscheiben an dem Mittelabschnitt des Mähbalkens geht.

Der genannte Mittelabschnitt des Mähbalkens kann sich mit seiner Längsachse, die einen geraden Verlauf nehmen kann, quer bzw. senkrecht zur bestimmungsgemä-ßen Fahrtrichtung erstrecken, wobei auf dem genannten Mittelabschnitt des Mähbalkens vorzugsweise mehr Mähscheiben angeordnet sind als auf dem nach vorne abknickenden und/oder nach vorne gebogenen Balkenendabschnitt. Beispielsweise können an dem Mittelabschnitt des Mähbalkens mindestens doppelt so viele Mähscheiben vorgesehen sein als an dem nach vorne abknickenden und/oder nach vorne gebogenen Balkenendabschnitt. Hierdurch kann ein vernünftiger Kompromiss zwischen großer Arbeitsbreite und ausreichender Verjüngung des Mähschwads erzielt werden.

In Weiterbildung der Erfindung kann der Mähbalken an jedem seiner rechten und linken Enden einen, wie beschrieben, nach vorne abknickenden und/oder nach vorne gebogenen Endabschnitt besitzen, der in der zuvor beschriebenen Weise mit einer oder zwei oder ggf. auch mehr als zwei Mähscheiben und darüber angeordneten Fördertrommeln bestückt sein kann, die jeweils gleichsinnig zueinander, an ihrer Vorderseite nach innen laufend rotieren können. Die am rechten Balkenendabschnitt angeordneten, mit Fördertrommeln bestückten Mähscheiben rotieren dabei natürlich entgegengesetzt zu den am linken Balkenendabschnitt vorgesehenen, mit Fördertrommeln bestückten Mähscheiben, um am rechten Balkenendabschnitt eine Förderwirkung nach links und am linken Balkenendabschnitt eine Förderwirkung nach rechts zu erzielen.

Eine solche Mähbalkenausbildung mit zwei nach vorne abknickenden bzw. nach vorne abbiegenden Balkenendabschnitten kann insbesondere bei einem frontseitig angebauten Frontmähwerk sinnvoll sein, um den Mähschwad sowohl am rechten Rand wie auch am linken Rand zu verjüngen und verlässlich innerhalb der Spurbreite des Schleppers abzulegen.

Bei nach rechts oder links auskragend angeordneten, beispielsweise heckseitig angebauten Mähwerkseinheiten kann es indes sinnvoll sein, nur den bezogen auf die Spur des Schleppers nach außen auskragenden Endabschnitt des jeweiligen Mähbalkens nach vorne abbiegend und/oder nach vorne abknickend auszubilden und den weiter innen zur Schlepperspur hin liegenden Mähbalken-Endabschnitt gerade zu belassen und die dortigen Mähscheiben ohne zugehörige Fördertrommeln auszubilden.

Dem Mähbalken können in an sich bekannter Weise nachlaufende Folgeaggregate zugeordnet sein, beispielsweise ein Konditionierer zum Konditionieren des Schnittguts und/oder ein Querförderer zum seitlichen Ablegen des Mähschwads versetzt zur Mittelachse der Fahrgasse des Mähbalkens. In Weiterbildung der Erfindung können solche Folgeaggregate eine im Vergleich zum Mähbalken verkleinerte Arbeitsbreite besitzen. Insbesondere kann der beschriebene, nach vorne abknickende und/oder nach vorne gebogene Balkenendabschnitt eine Arbeitsbahn überstreichen, die seitlich neben bzw. außerhalb der Arbeitsbahn des Folgeaggregats liegt. Die Arbeitsbahn des Folgeaggregats kann die Arbeitsbahn der Mähscheiben des Mittelabschnitts des Mähbalkens überdecken bzw. damit zusammenfallen.

Besitzt der Mähbalken rechts und links jeweils einen nach vorne abknickenden und/oder nach vorne gebogenen Endabschnitt, können die Arbeitsbahnen der nach vorne abknickenden und/oder nach vorne gebogenen Balkenendabschnitte neben der bzw. außerhalb der Arbeitsbahn des Folgeaggregats liegen. Das Folgeaggregat kann sich mit seiner Arbeitsbreite im Wesentlichen über die gesamte Arbeitsbreite der Mähscheiben erstrecken, die innerhalb der Mähscheiben auf den nach vorne gebogenen und/oder nach vorne abknickenden Endabschnitten angeordnet sind. Durch solchermaßen verschmälerte Folgeaggregate kann Gewicht eingespart werden, was nicht nur ein Verschwenken von Arbeitsstellung in Transportstellung erleichtert, sondern auch im Arbeitsbetrieb die Mähmaschinen leichtfüßiger über den Boden schweben läßt und/oder die Bodenanpassung bei welligem Gelände verbessert.

In Weiterbildung der Erfindung kann an dem Mähbalken ein durchgängiger Antriebsstrang vorgesehen sein, der untenliegend bzw. auf Höhe des Mähbalkens angeordnet und alle an dem Mähbalken angeordneten Mähscheiben antreiben kann, insbesondere einschließlich der genannten äußersten, nach vorne versetzten Mähscheibe an dem nach vorne abknickenden bzw. nach vorne abgebogenen Balkenendabschnitt. Ein solcher durchgängiger Antriebsstrang kann vorteilhafterweise in den Mähbalken integriert sein bzw. in einem Innenraum des Mähbalkens angeordnet sein. Unabhängig hiervon kann der genannte Antriebsstrang vorteilhafterweise aufeinander abwälzende Stirnräder aufweisen, die sozusagen eine Stirnradkette bilden, wobei jede Mähscheibe drehfest mit einem dazu koaxial angeordneten Stirnrad verbunden sein kann. Zwischen den drehfest an den Mähscheiben befestigten Stirnrädern können ggf. Zwischenstirnräder vorgesehen sein, um die Antriebsleistung von einer Mähscheibe auf die nächste Mähscheibe zu übertragen.

Beispielsweise können die genannten Stirnräder Stirnverzahnungsräder sein, die miteinander kämmen.

Der sich entlang dem Mähbalken erstreckende, untenliegende Antriebsstrang kann von oben her, insbesondere von einem über dem Mähbalken angeordneten Maschinenrahmen her an eine Antriebsquelle wie beispielsweise die Zapfwelle eines Schleppers angebunden sein, wobei insbesondere eine Antriebswelle von einem am Maschinenrahmen sitzenden Winkelgetriebe nach unten zu einem der Stirnräder des untenliegenden Antriebsstrangs am Mähbalken geführt sein kann.

In vorteilhafter Weiterbildung der Erfindung kann dabei die genannte Antriebswelle, die von einem obenliegenden Antriebsstrangteil her, insbesondere von einem am Maschinenrahmen angeordneten Winkelgetriebe her, kommt, nicht zur äußersten Mähscheibe des Mähbalkens, sondern zu einer weiter innenliegend angeordneten Mähscheibe geführt sein und/oder gegenüber der aufrechten Drehachse der äußersten Mähscheibe nach innen, d.h. zur Mähbalkenmitte hin, versetzt sein.

Insbesondere kann die genannte aufrechte Antriebswelle von oben her zur zweitäußersten Mähscheibe des Mähbalkens geführt sein, die beispielsweise im Übergangsbereich zwischen dem nach vorne abknickenden Balkenendabschnitt und dem daran angrenzenden Mittelabschnitt des Mähbalkens positioniert sein kann. Die Antriebswelle kann dabei direkt mit dem Stirnrad drehfest verbunden sein, mit dem die genannte zweitäußerste Mähscheibe drehfest verbunden ist, oder alternativ mit einem der Zwischenstirnräder zwischen den äußersten und zweitäußersten Mähscheiben oder den zweit- und drittäußersten Mähscheiben.

Die Anbindung der nach unten gehenden Antriebswelle an die beispielsweise zweitäußerste oder ggf. drittäußerste Mähscheibe des Mähbalkens ist insbesondere von Vorteil, wenn der Mähbalken aus einer liegenden Arbeitsstellung in eine aufrechte Transportstellung verklappbar aufgehängt ist. Hierdurch ergeben sich geringere Einschränkungen hinsichtlich der Gelenkwellenlängen und Gelenkwellenabwinklungen, wenn der Mähbalken und der diesen tragende Maschinenrahmenteil zwischen Arbeits- und Transportstellung verschwenkt wird. Insbesondere können aufwendige Ausbildungen des Winkelgetriebes, an das die zum Mähbalken gehende Antriebswelle angeschlossen ist, oder mehrfach teleskopierbare Gelenkwellen vermieden werden, ohne Nachteile bei der Transporthöhe trotz großer Arbeitsbreiten zu erleiden. Die Anbindung der nach unten gehenden Antriebswelle an die beispielsweise zweitäußerste oder ggf. drittäußerste Mähscheibe des Mähbalkens gestattet es insbesondere, die zum Winkelgetriebe am klappbaren Maschinenrahmen führende Gelenkwelle länger auszubilden, was deren Teleskoplänge auch bei nur wenigen Teleskopstücken verlängert und/oder die Knickwinkel verkleinert.

Vorteilhafterweise kann der Maschinenrahmen bzw. der Maschinenrahmenteil, der bei Betrachtung der Arbeitsstellung sich oberhalb des Mähbalkens erstrecken kann und an dem der Mähbalken aufgehängt ist, verkürzt ausgebildet werden, insbesondere kürzer als der daran aufgehängte Mähbalken und sich beispielsweise lediglich, bei Betrachtung der Arbeitsstellung, oberhalb des Mittelabschnitts des Mähbalkens erstrecken, beispielsweise nur über die Länge von zweitäußerster Mähscheibe rechts zu zweitäußerster Mähscheibe links. Insbesondere kann die Länge des Maschinenrahmens, an dem Mähbalken aufgehängt ist, um die Länge des nach vorne abknickenden Balkenendabschnitts oder der Summe der Längen der beiden nach vorne abknickenden Balkenendabschnitte im Vergleich zur Mähbalkenlänge verkürzt sein, so dass der Mähbalken mit seinem nach vorne abknickenden Balkenendabschnitt oder beiden nach vorne abknickenden Balkenendabschnitten rechts oder links oder beidseitig über den Maschinenrahmen hinaus auskragt.

Durch einen solchermaßen verkürzten Maschinenrahmen kann Gewicht gespart werden, was die Verschwenkung zwischen Arbeitsstellung und Transportstellung erleichtert und eine weitere Gewichtsersparnis durch kleiner dimensionierte Schwenkantriebe ermöglicht.

In Weiterbildung der Erfindung kann der nach vorne abknickende und/oder nach vorne gebogene Balkenendabschnitt durch eine zusätzliche, nochmals weiter außen sitzende Mähtrommel ergänzt werden, die in Weiterbildung der Erfindung zwischen verschiedenen Stellungen relativ zu dem Mähbalken verschwenkbar aufgehängt sein kann. Insbesondere kann eine solche zusätzliche, verstellbare Mähtrommel um eine, bei Betrachtung der liegend ausgerichteten Arbeitsstellung des Mähwerks, aufrechte Schwenkachse relativ zu dem nach vorne abgebogenen und/oder nach vorne abknickenden Balkenendabschnitt verschwenkbar aufgehängt sein, um gegegenüber dem genannten nach vorne abknickenden und/oder gebogenen Balkenenedabschnitt weiter nach vorne oder weiter nach hinten verschwenkt zu werden.

In vorteilhafter Weiterbildung der Erfindung kann sich die genannte aufrechte Schwenkachse dabei zumindest näherungsweise koaxial zur Rotationsachse der zuvor erläuterten, äußersten Mähscheibe des Mähbalkens erstrecken, die an dem nach vorne abknickenden und/oder nach vorne gebogenen Balkenendabschnitt angeordnet ist, sodass die zusätzliche, verstellbare Mähtrommel ohne Veränderung des Abstands zur äußersten Mähscheibe des Mähbalkens relativ zum nach vorne abknickenden Endabschnitt des Mähbalkens verstellbar ist bzw. in verschiedene Positionen bringbar ist, in denen die zusätzliche Mähtrommel in Fahrtrichtung betrachtet weiter oder weniger weit gegenüber der äußersten Mähscheibe auf dem nach vorne abknickenden Balkenendabschnitt positioniert sein kann.

Der Verstellbereich der genannten zusätzlichen, verstellbaren Mähtrommel kann dabei eine virtuelle Linie überstreichen, die durch die Rotationsachsen der beiden äußersten Mähscheiben des Mähbalkens geht und in der zuvor genannten Weise den spitzen Winkel des abknickenden Balkenendabschnitts zur Längsachse des Mittelabschnitts des Mähbalkens definiert. Beispielsweise kann der Verstellbereich der zusätzlichen, verstellbaren Mähtrommel zumindest +/- 10° und/oder +/- 25° zu der genannten virtuellen Linie betragen.

Die genannte zusätzliche, verstellbare Mähtrommel kann an jedem Endabschnitt des Mähbalkens vorgesehen sein, insbesondere wenn der Mähbalken an beiden Enden den beschriebenen, nach vorne abknickenden und/oder nach vorne gebogenen Balkenendabschnitt besitzt.

Die zusätzliche, verstellbare Mähtrommel wird vorzugsweise nicht durch einen untenliegenden, etwa auf Höhe der Schneidmesser angeordneten Antriebsstrang, sondern von oben her über einen obenliegenden Antriebsstrang angetrieben. Nichtsdestotrotz kann der Antrieb der zusätzlichen, verstellbaren Mähtrommel an den Antriebsstrang zum Antreiben der Mähscheiben des Mähbalkens angekoppelt sein.

In Weiterbildung der Erfindung kann eine Mischung aus untenliegendem und obenliegendem Antriebsstrang vorgesehen werden, um kollisionsträchtige, den Futterfluss behindernde Getriebeanordnungen und Antriebsstrang-Flügel mit Gelenken im Bereich der Schnittstelle zwischen der zusätzlichen, verschwenkbaren äußeren Mähtrommel und den festen Mähscheiben des Mähbalkens zu vermeiden. Für die Mähscheiben des Mähbalkens wird der Antriebsstrang in an sich bekannter Weise wie beschrieben unten am Mähbalken entlanggeführt, dann aber im Bereich der Schnittstelle zu der verschwenkbaren äußeren Mähtrommel nach oben geführt, um obenliegend die Schnittstelle zu überbrücken, und dann an der äußeren Mähscheibe wieder nach unten geführt, um letztere anzutreiben. Insbesondere kann der Antriebsstrang einen obenliegenden Strangabschnitt, der sich zwischen der Drehachse einer Mähscheibe des Mähbalkens und der Drehachse der äußeren, verschwenkbaren Mähtrommel liegend erstreckt und durch aufrechte Verbindungswellen einerseits mit der äußeren, verschwenkbaren Mähtrommel und andererseits mit einem untenliegenden Strangabschnitt zum Antreiben der Mähscheiben des Mähbalkens antriebsverbunden ist.

Der obere Strangabschnitt bildet dabei zusammen mit den beiden genannten Verbindungswellen eine U-förmige Antriebsstrang-Brücke bzw. ein sozusagen auf den beiden Verbindungswellen als Brückenpfeilern stehenden Brückenabschnitt, um den untenliegenden Strangabschnitt für die Mähscheiben des starren Mähbalkens mit der äußeren, verschwenkbaren Mähtrommel zu verbinden. Hierdurch können aus dem Stand der Technik bekannte, beispielsweise in Fahrtrichtung hinter dem Mähbalken liegende Zwischengetriebe und knickbare bzw. schwenkbare Antriebsstrangarme auf Höhe der Mähscheiben vermieden werden, so dass der Futterfluss auch im Bereich der Schnittstelle zwischen schwenkbarer äußerer Mähtrommel und dem benachbarten, innenliegenden Mähbalken unbehindert über die dazwischenliegende Schwenk-Schnittstelle hinweggehen kann und insbesondere auch hinter dem Mähbalken angeordnete Folgeaggregate wie beispielsweise einen Konditionierer verläßlich zu bedienen, wenn ein solches Folgeaggregat zur Futterbearbeitung gewünscht ist.

In Weiterbildung der Erfindung können die beiden genannten aufrechten Verbindungswellen zwischen dem oberen Antriebsstrang-Abschnitt und dem untenliegenden Antriebsstrangabschnitt bzw. der äußeren Mähscheibe zumindest näherungsweise koaxial zur Drehachse der äußeren, schwenkbaren Mähtrommel einerseits und zur Drehachse einer der Mähscheiben des Mähbalkens andererseits angeordnet werden.

Die genannten Verbindungswellen können vorteilhafterweise in Form von Gelenkwellen ausgebildet sein, beispielsweise in Form von Doppelgelenkwellen, um einen Achsversatz beispielsweise aufgrund von Verwindungen zwischen dem oberen Antriebsstrangabschnitt und den untenliegenden Mähscheiben ausgleichen zu können.

Insbesondere kann die Verbindungswelle, die den oberen Strangabschnitt mit dem untenliegenden Strangabschnitt zum Antreiben der inneren Mähscheiben verbindet, etwa koaxial zur Schwenkachse angeordnet sein, um die die äußere Mähtrommel relativ zum starren Mähbalken verschwenkt werden kann. Hierdurch fällt die Gelenkigkeit der Aufhängung der äußeren Mähtrommel zumindest näherungsweise mit der genannten Verbindungswelle zusammen, wodurch der obere Strangabschnitt, der sich zwischen der aufrechten Schwenkachse und der Drehachse des äußeren Mähorgans erstreckt, einfach ausgebildet werden, insbesondere brauchen keine Gelenkigkeiten vorgesehen oder kinematische Folgebewegungen aufgrund der Schwenkbarkeit ausgeglichen werden.

Der obere Strangabschnitt, der sozusagen den Verbindungsschenkel des Antriebsstrangs zwischen den beiden aufrechten Verbindungswellen bildet, kann insbesondere eine liegende Erstreckung bzw. Ausrichtung besitzen und sich vorzugsweise horizontal von der Drehachse der äußeren Mähtrommel zu der Drehachse einer der weiter innen liegenden Mähscheiben erstrecken. Der obere Strangabschnitt kann sich unabhängig hiervon näherungsweise auf dem Höhenniveau des Maschinenrahmens erstrecken, an dem der Mähbalken aufgehängt ist, wobei der genannte obere Strangabschnitt insbesondere unmittelbar unterhalb des genannten Maschinenrahmens angeordnet sein kann.

Die Erfindung wird nachfolgend anhand bevorzugter Ausführungsbeispiele und zugehörigen Zeichnungen näher erläutert. In den Zeichnungen zeigen:
- Fig. 1:: eine perspektivische Frontansicht einer landwirtschaftlichen Mähmaschine, die einen Mähbalken mit rechten und linken, jeweils in Fahrtrichtung nach vorne abknickenden Balkenendabschnitten besitzt, wobei die jeweils beiden äußersten Mähscheiben des Mähbalkens mit aufrechten Fördertrommeln zum Fördern des Schnittguts nach innen zur Balkenmitte hin versehen sind,
- Fig. 2:: eine Draufsicht auf die Mähmaschine aus Fig. 1, die die nach vorne abknickenden Balkenendabschnitte und die gegenüber dem Mähbalken verkleinerte Arbeitsbreite eines Folgeaggregats in Form eines Konditionierers zeigt,
- Fig. 3:: eine perspektivische Frontansicht des Mähbalkens der Mähmaschine aus den vorhergehenden Figuren, die die nach vorne abknickenden Endabschnitte des Mähbalkens und die Bestückung der rechts und links angeordneten, beiden äußersten Mähscheiben mit den Fördertrommeln zeigt,
- Fig. 4:: eine Draufsicht auf den Mähbalken und dessen Mähscheiben aus Fig. 3,
- Fig. 5:: eine perspektivische Frontansicht eines Mähbalkens und dessen Aufhängung an einem Maschinenrahmen einer Mähmaschine ähnlich den vorhergehenden Figuren, wobei als nachlaufendes Folgeaggregat zwei Schwadscheiben zur nochmals weiteren Verjüngung der Mähschwadbreite vorgesehen sind,
- Fig. 6:: eine Draufsicht auf den Mähbalken und die nachlaufenden Schwadscheiben aus Fig. 5,
- Fig. 7:: eine perspektivische Frontansicht des Mähbalkens aus den vorhergehenden Figuren, die die Anbindung des Antriebsstrangs an eine zweitäußerste Mähscheibe über eine von oben her kommende, an ein Winkelgetriebe am Maschinenrahmen angebundene Antriebswelle zeigt,
- Fig. 8:: eine Draufsicht auf den Mähbalken und dessen Antriebsstrang aus Fig. 7,
- Fig. 9:: eine perspektivische Frontansicht des Mähbalkens ähnlich Fig. 8, die die Anbindung des untenliegenden Antriebsstrangs des Mähbalkens an ein obenliegendes Winkelgetriebe über eine von oben her kommende Antriebswelle zeigt, wobei in Alternative zu den Fig. 7 und 8 die Antriebswelle nicht koaxial zur zweitäußersten Mähscheibe zum Mähbalken geführt ist, sondern an ein Zwischenstirnrad zwischen den beiden äußersten Mähscheiben angebunden ist,
- Fig. 10:: eine Draufsicht auf den Mähbalken aus Fig. 9 und dessen Anbindung an den Antriebsstrang über ein Zwischenstirnrad,
- Fig. 11:: eine perspektivische Ansicht des Mähbalkens und des Maschinenrahmens, an dem der Mähbalken aufgehängt ist, wobei ähnlich aber alternativ zu Fig. 7 der Antriebsstrang zum Winkelgetriebe am Maschinenrahmen von einer Stirnseite des Maschinenrahmens her erfolgt und die verlängerte Ausbildung der Gelenkwelle zeigt, die durch die Anbindung des Antriebsstrangs an die zweitäußerste Mähscheibe ermöglicht wird,
- Fig. 12:: eine Draufsicht auf den Mähbalken und dessen Aufhängung am Maschinenrahmen aus Fig. 11, die die zur Stirnseite des verkürzten Maschinenrahmens führende Gelenkwelle zeigt,
- Fig. 13:: eine perspektivische Darstellung eines Mähbalkens mit nach vorne abknickenden Balkenendabschnitten und der Aufhängung des Mähbalkens an einem Maschinenrahmen, wobei in Ergänzung der vorherigen Ausführungsbeispiele seitlich neben der äußersten Mähscheibe des Mähbalkens eine zusätzliche, verstellbare Mähtrommel vorgesehen ist, die um eine aufrechte Schwenkachse relativ zum nach vorne abknickenden Mähbalkenendabschnitt verstellbar ist, und
- Fig. 14:: eine Draufsicht auf den Mähbalken und dessen Aufhängung am Maschinenrahmen aus Fig. 13, die die Verstellbarkeit der zusätzlichen Mähtrommel zeigt.

Wie die Figuren zeigen, umfasst die Mähmaschine 1 einen Maschinenrahmen 2, der einen Längsträger 23 umfassen kann, welcher sich in Arbeitsstellung liegend quer zur Fahrtrichtung über einem Scheibenmähwerk 3 erstrecken kann. Der genannte Maschinenrahmen 2 kann dabei über eine an sich bekannte Anbauvorrichtung an einen Schlepper heckseitig oder insbesondere auch frontseitig angebaut werden, wobei die Anbauvorrichtung beispielsweise einen Anbaubock aufweisen kann, der durch eine Dreipunktanlenkung mit einem Oberlenker und zwei Unterlenkern am Schlepper angebaut werden kann.

Das Scheibenmähwerk 3 kann dabei ein zentral vor dem Schlepper gefahrenes Frontmähwerk bilden, alternativ dazu ggf. aber auch einen Seitenflügel einer Mähwerkskombination bilden, der beispielsweise um eine liegende oder stehende Schwenkachse in eine Transportstellung verbringbar ist, wobei das Mähwerk in diesem Fall z.B. mit dem genannten Längsträger 23 an einem zentralen Maschinenrahmenteil, der am Schlepper angebaut ist, schwenkbar aufgehängt sein kann.

Wie die Figuren zeigen, umfasst das Scheibenmähwerk 3 einen Mähbalken 4, der liegend quer zur Fahrtrichtung F ausgerichtet ist, zumindest in der Arbeitsstellung der Mähmaschine 1, wobei eine Vielzahl von Mähscheiben 5 an dem genannten Mähbalken 4 um jeweils aufrechte Drehachsen 7 drehbar gelagert sind. Die genannten Mähscheiben 5 können tellerförmig ausgebildet sein und an ihrem Umfang mit Messern bestückt sein, die bei rotatorischem Antreiben der Mähscheiben 5 entlang ihrer Umlaufbahnen das Erntegut in an sich bekannter Weise umschneiden.

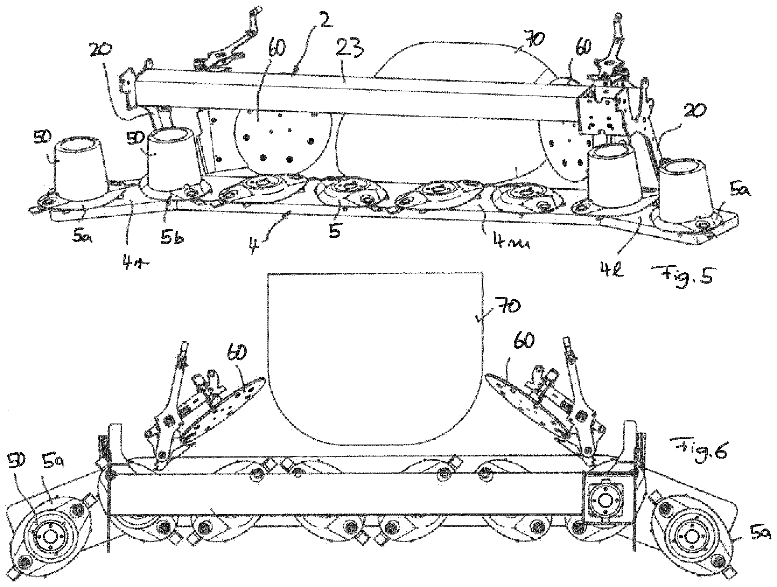

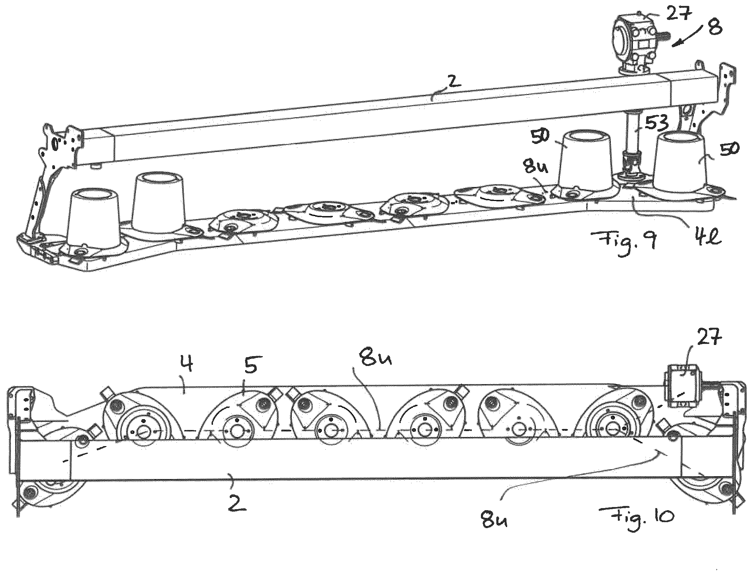

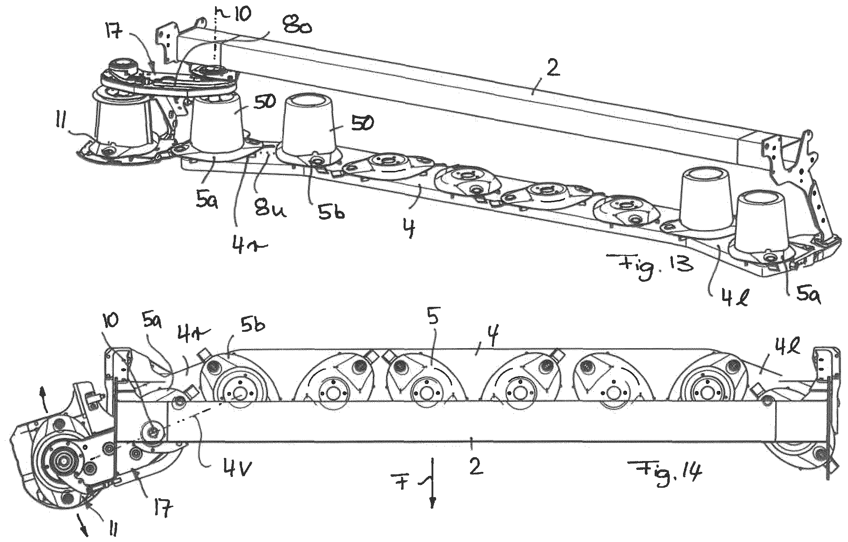

Der Mähbalken 4 ist an dem genannten Maschinenrahmen 2 aufgehängt. Hierzu kann ein Halterungsstiel bzw. Mähbalkenträger 20 vorgesehen sein, der einerseits starr am Maschinenrahmen 2 befestigt ist und andererseits starr mit dem Mähbalken 4 verbunden sein kann und sich beispielsweise von der Hinterseite des Mähbalkens 2 schräg nach oben zum Maschinenrahmen 2 erstrecken kann, vgl. Figuren 5 bis 10, wobei der Haltestiel 20 am äußeren Ende des Mähbalkens angebunden sein kann, vgl. Figuren 9 und 13, oder ein Stück weiter nach innen versetzt, bspw. im Bereich einer zweitäußersten Mähscheibe 5b, vgl. Figuren 5, 7 und 11.

Dabei können an rechten und linken Endabschnitten des Mähbalkens 4 zwei solche Halterungsstiele bzw. Mähbalkenträger 20 vorgesehen sein, insbesondere jeweils ein Stück nach innen versetzt, wie noch erläutert wird.

Die inneren Mähscheiben 5i sind entlang der Längsachse des Mähbalkens 4 in fester Position entlang einer fluchtenden Verbindungslinie 4L aufgereiht, die sich als Gerade quer zur Fahrtrichtung F erstrecken kann.

Zusätzlich zu den genannten inneren Mähscheiben 5i ist zumindest eine äußere Mähscheibe 5a vorgesehen, die am äußeren Ende des Mähbalkens 4 angeordnet und gegenüber den inneren Mähscheiben 5i in Fahrtrichtung nach vorne versetzt ist. Insbesondere können an beiden, das heißt an den rechten und linken Endabschnitten des Mähbalkens 4 solche äußeren Mähscheiben 5a vorgesehen und nach vorne versetzt angeordnet sein.

Wie die Figuren zeigen, besitzt der Mähbalken 4 an zumindest einem, vorzugsweise beiden Enden jeweils einen in Fahrtrichtung F nach vorne abknickenden und/oder nach vorne gebogenen Balkenendabschnitt 41 bzw. 4r, an dem die äußerste Mähscheibe 5a angeordnet ist. Die genannten, nach vorne abknickenden und/oder nach vorne gebogenen Balkenendabschnitte 41 bzw. 4r sind dabei vorzugsweise deutlich kürzer als der Mittelabschnitt 4m des Mähbalkens 4, wobei an dem genannten Mittelabschnitt 4m deutlich mehr Mähscheiben 5 angeordnet sind, als an dem jeweiligen äußeren Balkenendabschnitt 4l bzw. 4r. Beispielsweise können an dem Mittelabschnitt 4m des Mähbalkens 4 doppelt so viele oder dreimal so viele oder viermal so viele Mähscheiben 5 angeordnet sein, als an dem jeweiligen nach vorne abgeknickten Balkenendabschnitt 4l bzw. 4r.

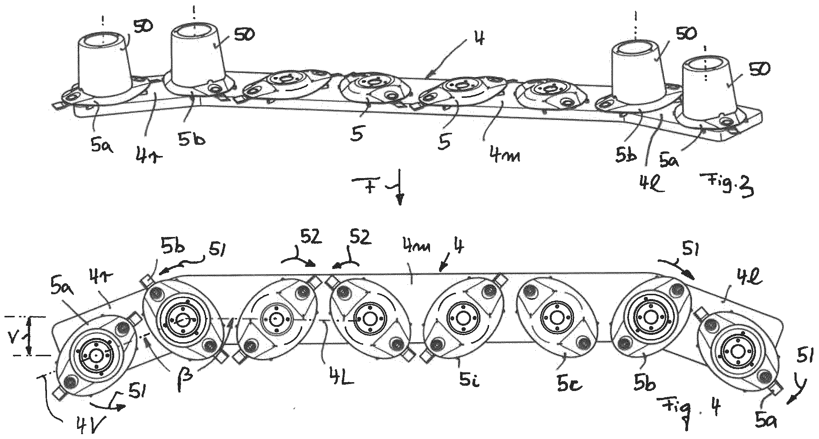

Die äußeren Balkenendabschnitte 4l, 4r können mit ihrer Längsachse bzw. einer Tangente dazu einen Winkel β einschließen, der beispielsweise im Bereich von 150°-170° oder 150° bis 165° betragen kann, beispielsweise etwa 155° oder 160°, vgl. beispielsweise Fig. 4. Der genannte Winkel β kann insbesondere zwischen einer virtuellen Linie 4L, die durch die Rotationsachsen der Mähscheiben 5 des Mittelabschnitts 4m des Mähbalkens 4 geht, und einer virtuellen Linie 4V definiert sein, die durch die aufrechten Rotationsachsen der äußersten und zweitäußersten Mähscheiben 5a, 5b geht, vgl. Fig. 4.

In Fahrtrichtung F kann dabei die genannte äußerste Mähscheibe 5a gegenüber der zweitäußersten Mähscheibe 5b einen Versatz V aufweisen, der zwischen den Rotationsachsen der genannten äußersten und zweitäußersten Mähscheiben gemessen wird und etwa 20%-100% oder 25%-75% oder 30%-60% des Abstands der genannten Rotationsachsen der äußersten und zweitäußersten Mähscheiben betragen kann, vgl. Fig. 4.

Die genannten, nach vorne abgeknickten bzw. nach vorne gebogenen Balkenendabschnitte 4l und 4r sind vorteilhafterweise mit dem Mittelabschnitt 4m des Mähbalkens 4 starr verbunden, beispielsweise einstückig ausgebildet, so dass die nach vorne versetzte Position der äußersten Mähscheibe 5a relativ zu den weiter innen liegenden Mähscheiben 5 fest vorgegeben ist.

Wie die Figuren zeigen, sind die beiden äußersten Mähscheiben 5a und 5b jeweils mit einer turmartigen, in Arbeitsstellung des Mähbalkens 4 aufrecht stehenden Fördertrommel 50 versehen, die koaxial zu den Rotationsachsen "ihrer" Mähscheiben 5a bzw. 5b angeordnet sein und mit den genannten Mähscheiben mitrotieren bzw. synchron umlaufen können.

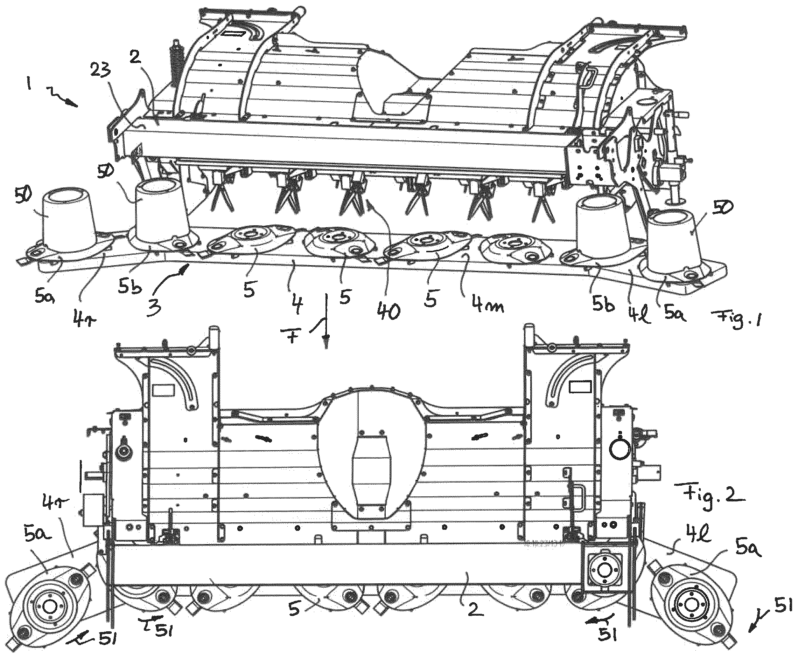

Wie die Pfeile 51 verdeutlichen, vgl. Fig. 2 oder 4 oder 6, laufen dabei die beiden äußersten Mähscheiben 5a und 5b und die darüber angeordneten Fördertrommeln 50 an jedem Mähbalkenende gleichsinnig um, und zwar in eine Drehrichtung, bei der die in Fahrtrichtung vorderen Sektoren der Fördertrommeln 50 nach innen zur Mähbalkenmitte hinlaufen. Hierdurch treiben die Fördertrommeln 50 das anlaufende Schnittgut jeweils nach innen bzw. zur Mähbalkenmitte hin, wobei die Fördertrommel 50 der äußersten Mähscheibe 5a das Schnittgut zumindest soweit nach innen treiben kann, dass es auf die Fördertrommel 50 der zweitäußersten Mähscheibe 5b treffen kann bzw. von dieser zweitäußersten Fördertrommel dann weiter nach innen zur Mähbalkenmitte hin getrieben werden kann. Durch den Versatz der Fördertrommel 50 an den beiden äußersten Mähscheiben 5a und 5b in Fahrtrichtung F gelingt es der Fördertrommel 50 an der alleräußersten Mähscheibe 5a leichter, das Schnittgut soweit nach innen zu treiben, dass es nicht zwischen den beiden Fördertrommeln hindurchläuft, sondern auf die Innenseite der Fördertrommel an der zweitäußersten Mähscheibe 5b gelangt.

Im Gegensatz zu den beiden äußersten Mähscheiben 5a und 5b können die auf dem Mittelabschnitt 4m des Mähbalkens 4 angeordneten Mähscheiben 5 abwechselnd in die eine und die andere rotatorische Drehrichtung angetrieben sein, vgl. die Drehrichtungspfeile 52 beispielsweise in Fig.4 und Fig. 6.

Die Mähscheiben 5 des Mähbalkens 4 können dabei durch einen untenliegenden Antriebsstrang 8u angetrieben werden, der in den Mähbalken 4 integriert sein bzw. sich entlang des Mähbalkens 4 erstrecken kann, wobei die Antriebsleistung sozusagen von Mähscheibe zu Mähscheibe weiter übertragen wird.

Der untere Strangabschnitt 8u kann dabei in per se bekannter Weise ein Stirnradgetriebe aufweisen, das eine Reihe von Stirnrädern umfasst, die entlang des Mähbalkens 4 aufgereiht sind und miteinander in Wälzeingriff stehen, wobei jede der Mähscheiben 5 mit einem der Stirnräder drehfest gekoppelt ist. Über Zwischenstirnräder wird die Drehbewegung der Mähscheiben 5i miteinander synchronisiert und die Antriebsleistung weiterübertragen, wobei vorzugsweise Zahnräder in Kammeingriff miteinander stehen.

Die Antriebsbewegung kann über eine Gelenkwelle 54 von einer Zapfwelle des nicht gezeigten Schleppers her übertragen und an dem einem oder dem anderen Ende des Mähbalkens 4 in eine dortige Mähscheibe 5 eingeleitet werden. Wie die Ausführungsbeispiele nach den Figuren 5 bis 8 sowie 11 bis 12 zeigen, kann ein Winkelgetriebe 27 beispielsweise an einem Endabschnitt des Maschinenrahmens 2 vorgesehen sein, um die Antriebsbewegung in die darunterliegende Mähscheibe 5 einzuleiten und dann über den genannten Antriebsstrang 8, genauer gesagt den unteren Strangabschnitt 8u von Mähscheibe zu Mähscheibe entlang des Mähbalkens 4 zu übertragen. Die Antriebsleistung kann ggf. aber auch an anderer Stelle in den Antriebstrang 8 eingeleitet werden.

Insbesondere kann die Antriebsbewegung in den untenliegenden Antriebsstrang 8u im Bereich der zweitäußersten Mähscheibe 5b eingeleitet werden, wobei das genannte Winkelgetriebe 27 oberhalb der zweitäußersten Mähscheibe 5b am Maschinenrahmen 2 angeordnet sein kann oder ggf. auch ein Stück weit dahinter, wie dies Figur 9 und Figur 10 zeigen. Die Antriebsbewegung kann dabei vom Winkelgetriebe 27 über eine aufrechte Antriebswelle nach unten zum Mähbalken 4 übertragen werden, wobei die genannte aufrechte Antriebswelle beispielsweise koaxial zur Drehachse der zweitäußersten Mähscheibe 5b angeordnet sein und sich durch die Fördertrommel 50 hindurch erstrecken kann. Die Antriebswelle kann dabei direkt mit einem Stirnrad des untenliegenden Antriebsstrangs 8u drehfest verbunden sein, welches wiederum drehfest mit der zweitäußersten Mähscheibe 5b verbunden sein kann.

Wie Figur 9 und Figur 10 zeigen, kann die aufrechte Antriebswelle 53 aber auch außerhalb der Fördertrommeln 50 nach unten geführt sein und/oder an ein Zwischenstirnrad drehfest angebunden sein, welches zwischen den beiden äußersten Mähscheiben 5a und 5b vorgesehen sein kann, vgl. Figur 9 und Figur 10, oder auch zwischen der zweitäußersten Mähscheibe 5b und einer drittäußersten Mähscheibe vorgesehen sein kann. Insbesondere kann die Antriebswelle 53 in diesem Fall oberhalb einer Hinterkante bzw. eines Hinterkantenbereichs des Mähbalkens 4 angeordnet sein, insbesondere hinter der Fördertrommel 50 der äußersten Mähscheibe 5a, sodass Schnittgut sich nicht an der genannten Antriebswelle 53 verfängt.

Wie die Figuren 1 und 2, 5 und 6, 7 und 8 sowie 11 und 12 zeigen, kann der genannte Maschinenrahmen 2, insbesondere dessen Längsträger 23 vorteilhafterweise kürzer ausgebildet sein als der Mähbalken 4 und/oder sich nur über dem Mittelabschnitt 4m des Mähbalkens 4 erstrecken, sodass die nach vorne abgeknickten Balkenendabschnitte 4l, 4r rechts und links über den Maschinenrahmen 2 auskragen. Hierdurch kann Gewicht eingespart werden.

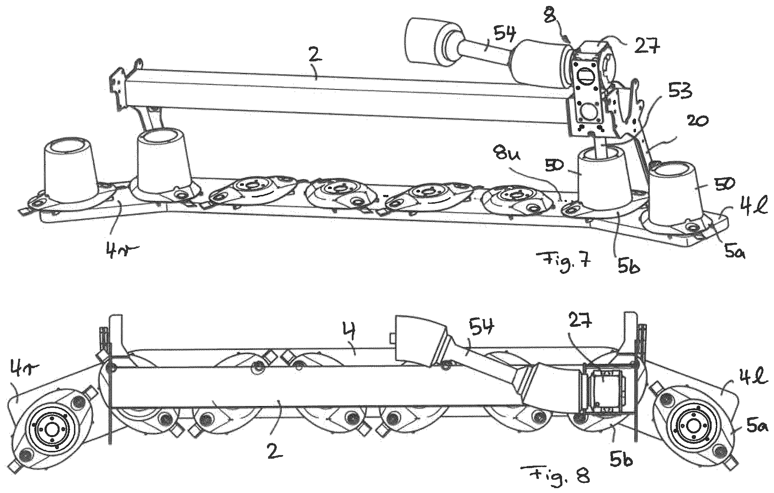

Durch die Anbindung des Antriebsstrangs 8 an den Mähbalken 4 nicht ganz außen im Bereich der alleräußersten Mähscheibe 5a, sondern nach innen versetzt im Bereich der zweitäußersten Mähscheibe 5b bzw. noch weiter nach innen versetzt, kann das genannte Winkelgetriebe 27 ebenfalls vorteilhafterweise in entsprechender Weise nach innen versetzt positioniert sein, vgl. Figuren 7 bis 12, wodurch eine von dem genannten Winkelgetriebe 27 weiterführende Gelenkwelle 54, die das Winkelgetriebe 27 beispielsweise von einer Zapfwelle des Schleppers her antreiben kann, günstiger ausgebildet werden kann, insbesondere länger sein kann und/oder weiter voneinander beabstandete Gelenke aufweisen kann.

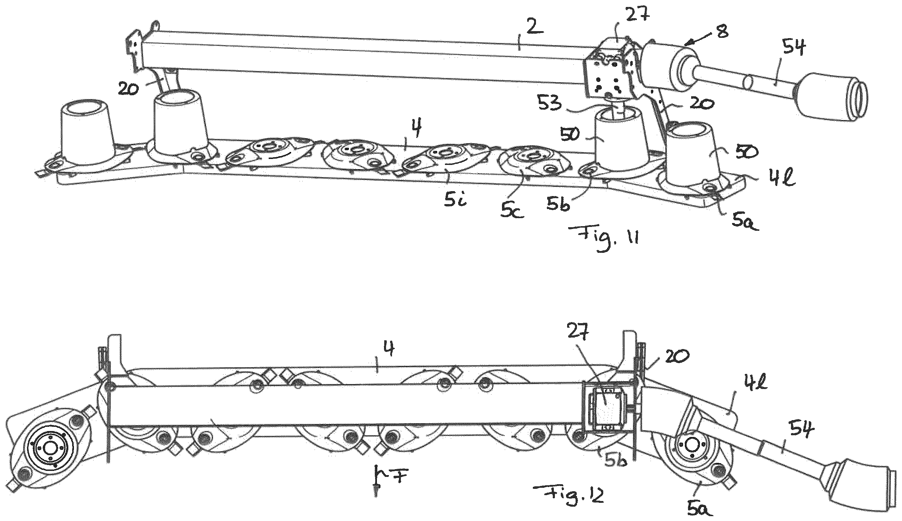

Hierdurch wird insbesondere das Verschwenken des Scheibenmähwerks 3 aus der abgesenkten Arbeitsstellung in eine aufrechte Transportstellung erleichtert, insbesondere wenn das Scheibenmähwerk 3 einen Seitenflügel der Mähmaschine bildet und die genannte Gelenkwelle 54 stirnseitig vom Maschinenrahmen 2 weggeführt ist, beispielsweise um an einem zentralen Maschinenrahmenteil weitergeführt zu werden. Durch das Versetzen des Winkelgetriebes 27 nach innen, insbesondere etwa über die zweitäußerste Mähscheibe 5b, erhält die Gelenkwelle 54 zusätzliche Länge, da sie über die alleräußerste Mähscheibe 5a hinwegverlaufen kann, vgl. Figur 12, was sich zum einen günstig auf die teleskopierbare Länge der Gelenkwelle 54 auswirkt, nämlich bei weniger Teleskopteilen eine größere Teleskopierbarkeit erreicht, und beim Verschwenken des Maschinenrahmens 2 in die Transportstellung kleinere Knickwinkel ausreichen lässt.

Wie die Figuren 1 und 2 zeigen, können dem Scheibenmähwerk 3 nachlaufende Folgeaggregate 40 vorgesehen sein, beispielsweise in Form eines Konditionierers, der einen Konditioniererrotor mit umlaufendenen Konditioniererwerkzeugen aufweisen kann und beispielsweise in Arbeitsstellung um eine liegende Drehachse quer zur Fahrtrichtung F umlaufen kann, vgl. Figur 1 und Figur 2. Alternativ oder zusätzlich zu einem solchen Konditionierer kann als Folgeaggregat 40 auch ein Querförderer vorgesehen sein, beispielsweise in Form einer Querförderschnecke oder eines Querförderbands, um das Schnittgut bzw. den Mähschwad quer zur Fahrtrichtung F zu versetzen und seitlich abzulegen. Beispielsweise kann bei heckseitig angebauten Mähwerksflügeln ein solcher Querförderer vorgesehen werden, um die von den Seitenflügeln geschnittenen Mähschwade zur Mitte hin zusammenlegen zu können.

Wie die Figuren 1 und 2 zeigen, kann ein solches Folgeaggregat 40 vorteilhafterweise eine geringere Arbeitsbreite aufweisen als der Mähbalken 4. Insbesondere können die beschriebenen, nach vorne abgeknickten und/oder nach vorne gebogenen Balkenendabschnitte 4l, 4r Arbeitsbahnen überstreichen, die seitlich neben bzw. außerhalb der Arbeitsbahn des Folgeaggregats 40 liegen. Das Folgeaggregat 40 kann insbesondere eine Arbeitsbreite besitzen, die näherungsweise der Arbeitsbreite des Mittelabschnitts 4m des Mähbalkens 4 entspricht bzw. der Breite des Mähschwads entspricht, die gegenüber der gesamten Arbeitsbreite des Mähbalkens 4 reduziert ist.

Durch eine solchermaßen ermöglichte Verkürzung bzw. Verschmälerung der Folgeaggregate 40 kann eine weitere Gewichtsersparnis erreicht werden, was nicht nur das Ausheben der Mähmaschine 1 in eine Transportstellung erleichtert, sondern vor allen Dingen auch ein leichtfüßigeres Hinwegschweben über Bodenwellen oder andere Geländeunebenheiten und damit eine verbesserte Bodenanpassung ermöglicht.

Wie die Figuren 5 und 6 zeigen, können in Fahrtrichtung F hinter dem Mähbalken 4 auch Schwadscheiben 60 angeordnet werden, um den Mähschwad 70 nochmals weiter zu verschmälern bzw. noch weiter zur Balkenmitte hin zu verlagern. Die Schwadscheiben 60 können dabei um liegende, zur Fahrtrichtung F spitzwinklig geneigte Scheibenachsen drehbar gelagert sein und sich durch Bodenkontakt selbst rotatorisch antreiben.

Um mit den Fördertrommeln 50 sinnvoll zusammenzuarbeiten, können die Schwadscheiben 60 hinter den Fördertrommeln 50 der zweitäußersten Mähscheiben 5b und quer zur Fahrtrichtung innen an die Arbeitsbahn der Fördertrommeln 50 anschließend positioniert sein, vgl. Fig. 6, so dass die Schwadscheiben 60 das Schnittgut fangen und weiter nach innen leiten können, das von den Fördertrommeln 50 der zweitäußersten Mähscheiben 5b von deren Innenseite her über den Mähbalken 4 strömt. Die Schwadscheiben können jeweils eine Arbeitsbahn überstreichen, die innen an die Arbeitsbahn der inneren Fördertrommeln 50 anschließt, vgl. Fig. 6.

Ggf. können im Bereich eines Spalts zwischen den Scharscheiben 60 und den Fördertrommeln 50 aufrechtstehende Leitbleche vorgesehen sein, um das von den Fördertrommeln 50 her kommende Schnittgut im wesentlichen vollständig auf die Schwadscheiben 60 zu leiten, vgl. Fig. 5 und 6.

Wie die Figuren 13 und 14 zeigen, kann zusätzlich zu den am Mähbalken 4 vorgesehenen Mähscheiben 5 eine zusätzliche, nochmals weiter außen sitzende Mähtrommel 11 vorgesehen sein, die zwischen verschiedenen Stellungen relativ zu dem Mähbalken 4 verschwenkbar aufgehängt ist, und zwar um eine in Arbeitsstellung aufrechte Schwenkachse 10, die sich vorteilhafterweise koaxial zur Drehachse der alleräußersten Mähscheibe 5a erstrecken kann, vgl. Figur 13 und 14. Diese zusätzliche, verschwenkbare Mähtrommel 11 ist dabei quer zur Fahrtrichtung F neben der äußersten Mähscheibe 5a des Mähbalkens 4 angeordnet und gegenüber dieser vorteilhafterweise in Fahrtrichtung F ein Stück weiter nach vorne versetzt, wobei die zusätzliche Mähtrommel 11 durch Verschwenken um die Schwenkachse 10 relativ zu der äußeren Mähscheibe 5a in Fahrtrichtung wahlweise mehr oder weniger nach vorne versetzt positioniert werden kann.

Die zusätzliche Mähtrommel 11 kann dabei vorteilhafterweise durch eine Aufhängung 17 schwenkbar am Maschinenrahmen 2 bzw. dessen Längsträger 23 aufgehängt sein, vgl. Figur 13 und 14.

Die aufrechte Schwenkachse 10 der Aufhängung 17 zum Verschwenken der äußeren Mähtrommel 5a kann vorzugsweise mit der Drehachse 7 einer der Mähscheiben 5 des Mähbalkens 4 zusammenfallen, insbesondere mit der Drehachse 7 der äußersten, nach vorne versetzten Mähscheibe 5a oder auch der unmittelbar zur äußersten Mähscheibe 5a benachbarten, zweitäußersten Mähscheibe 5b des Mähbalkens 4.

Die schwenkbare Aufhängung 17 für die äußere Mähtrommel 11 umfasst dabei einen obenliegenden Schwenkträger, der sich von der Schwenkachse 10 ausgehend liegend zur Drehachse der zusätzlichen Mähtrommel 11 erstrecken kann. Der genannte Schwenkträger kann dabei horizontal ausgerichtet sein und/oder unmittelbar unterhalb des Maschinenrahmens 2 positioniert sein und von einem Endabschnitt des Maschinenrahmens 2 auskragen, vgl. Figuren 13 und 14.

Der genannte Schwenkträger kann dabei ein Hohlprofil, beispielsweise einen plattenförmigen Kastenträger bilden, der durch eine Schwenklagerung um die genannte aufrechte Schwenkachse 10 am Maschinenrahmen 2 oder einer damit starr verbundenen Lagerkonsole gelagert sein kann.

Der genannte Schwenkträger trägt mit seinem auskragenden Endabschnitt wiederum die äußere Mähtrommel 11.

Wie die Figuren zeigen, kann die äußere Mähtrommel 11 durch die schwenkbare Aufhängung 17 zur Vorderseite des Mähbalkens 4 bzw. in Fahrtrichtung nach vorne verschwenkt werden, wobei Figur 14 eine teilweise nach vorne verschwenkte, immer noch außerhalb der äußersten Mähscheiben des Mähbalkens 4 liegende Zwischenstellung zeigt, die als Arbeitsstellung genutzt werden kann, während eine nochmals weiter nach vorne verschwenkte Arbeitsstellung und auch eine weniger weit nach vorne versetzte Arbeitsstellung eingestellt werden kann. Die Pfeile oberhalb und unterhalb der Mähtrommel 11 in Figur 14 verdeutlichen die Verschwenkbarkeit der zusätzlichen, verstellbaren Mähtrommel 11 bezüglich der Fahrtrichtung F weiter bzw. weniger weit nach vorne, wobei der Schwenkbereich der Mähtrommel 11 die virtuelle Linie 4V durch die Rotationsachsen der äußersten und zweitäußersten Mähscheiben am nach vorne abknickenden Balkenendabschnitt 4r einschließen und beidseits darüber hinausgehen kann, vgl. Fig. 14.

Die schwenkbare Aufhängung kann dabei einen Stellantrieb zum motorischen Verstellen der Schwenkstellungen bzw. zum Einstellen verschiedener Schwenkstellungen der äußeren Mähtrommel aufweisen, bspw. in Form eines Stellzylinders, der als Druckmittelzylinder ausgebildet und gelenkig am Schwenkträger der Aufhängung 17 einerseits und am Maschinenrahmen 2 bzw. dessen Lagerkonsole andererseits jeweils von der Schwenkachse 10 beabstandet angelenkt sein kann, wobei aber auch bspw. ein Hydromotor zum Verschwenken vorgesehen oder auch gar kein Antrieb vorgesehen sein kann, sondern eine manuelle Verstellung. Der Stellantrieb kann bspw. stufenlos arbeiten und in beliebigen Stellungen für den Arbeitsbetrieb und/oder den Transport "einfrieren" bzw. stehenbleiben und die jeweilige Stellung halten, oder auch stufenweise arbeiten bzw. dazu ausgebildet sein, nur einzelne Verstellstufen anzufahren.

Die Antriebsbewegung zu der äußeren verschwenkbaren Mähtrommel wird vorzugsweise nicht untenliegend entlang des Mähbalkens 4 weiter nach außen übertragen, sondern über eine Antriebsstrang-Brücke und insofern obenliegend von der äußersten oder zweitäußersten Mähscheibe 5a, 5b zu der verstellbaren Mähtrommel 11 übertragen. Diese Antriebsstrang-Brücke kann dabei einen obenliegenden Antriebsstrangabschnitt 8o umfassen, der sich näherungsweise auf Höhe des Maschinenrahmens 2 liegend von der Drehachse 7 der zweitäußersten Mähscheibe 5i zu der äu-ßeren Mähscheibe 5a erstrecken kann. Dieser obenliegende Strangabschnitt 8o kann insbesondere in den genannten Schwenkträger der schwenkbaren Aufhängung 17 für die äußere Mähscheibe 5 integriert sein bzw. sich entlang dieses Schwenkträgers 18 erstrecken.

Der genannte obenliegende Strangabschnitt 8o ist dabei über zwei aufrechte Verbindungswellen jeweils nach unten geführt. Die innere Verbindungswelle kann sich dabei koaxial zur Drehachse der äußersten Mähscheibe 5a am Mähbalken 4 erstrecken und durch deren Fördertrommel 50 hindurchgehen, und den obenliegenden Antriebsstrang 8o mit dem untenliegenden Antriebsstrang 8u koppeln.

## Patentansprüche

1. Landwirtschaftliche Mähmaschine zum Anbau an einen Schlepper, mit einem Scheibenmähwerk (3), das an einem Maschinenrahmen (2) aufgehängt ist und einen Mähbalken (4), der sich in Arbeitsstellung liegend quer zur Fahrtrichtung (F) erstreckt, sowie mit Messern bestückte Mähscheiben (5) umfasst, die nebeneinander aufgereiht am Mähbalken (4) um aufrechte Drehachsen drehbar gelagert sind, wobei ein Antriebsstrang (8) zum rotatorischen Antreiben der Mähscheiben (5) am Mähbalken (4) angeordnete Antriebsräder, vorzugsweise in Form miteinander in Wälzeingriff stehender Stirnräder, aufweist, **dadurch gekennzeichnet, dass** der Mähbalken (4) an zumindest einem Ende einen bezüglich der Fahrtrichtung (F) nach vorne abknickenden und/oder nach vorne gebogenen äußeren Balkenendabschnitt (4l, 4r) aufweist, an dem zumindest eine Mähscheibe (5a) gelagert ist, die gegenüber den Mähscheiben (5) an einem Mittelabschnitt (4m) des Mähbalkens (4) in Fahrtrichtung nach vorne versetzt angeordnet und mit einer aufrechten Fördertrommel (50) zur Schnittgutförderung zur Mähbalkenmitte hin versehen ist.

2. Landwirtschaftliche Mähmaschine nach dem vorhergehenden Anspruch, wobei die genannte Mähscheibe (5a) an dem nach vorne abknickenden und/oder nach vorne gebogenen Balkenendabschnitt (4l, 4r) eine äußerste Mähscheibe (5a) des Mähbalkens bildet und eine dazu benachbarte, zweitäußerste Mähscheibe (5b) des Mähbalkens (4) ebenfalls mit einer Fördertrommel (50) versehen ist, wobei die beiden genannten, äußersten und zweitäußersten Mähscheiben (5a, 5b) und die darüber angeordneten Fördertrommeln (50) gleichsinnig rotierend antreibbar sind, und zwar in einer Drehrichtung (51), bei der ein in Fahrtrichtung (F) vorderer Trommelabschnitt der Fördertrommeln (50) nach innen zur Mähbalkenmitte hin läuft.

3. Landwirtschaftliche Mähmaschine nach einem der vorhergehenden Ansprüche, wobei der Mähbalken (4) an beiden gegenüberliegenden Enden jeweils mit einem in Fahrtrichtung (F) nach vorne abgeknickten und/oder nach vorne gebogenen Balkenendabschnitt (4l, 4r) versehen ist und an jedem der genannten Balkenendabschnitte (4l, 4r) zumindest eine Mähscheibe (5a) angeordnet ist, die gegenüber den Mähscheiben (5) an einem Mittelabschnitt (5m) des Mähbalkens (4) in Fahrtrichtung (F) nach vorne versetzt angeordnet ist.

4. Landwirtschaftliche Mähmaschine nach dem vorhergehenden Anspruch, wobei die jeweils beiden äußersten Mähscheiben (5a, 5b) an den gegenüberliegenden Enden des Mähbalkens (4) jeweils mit einer in Arbeitsstellung aufrechten Fördertrommel (50) versehen sind, wobei die beiden äußersten Mähscheiben (5a, 5b) und die zugehörigen Fördertrommeln (50) an einem linken Ende des Mähbalkens (4) gleichsinnig rotatorisch antreibbar sind derart, dass die Fördertrommeln (50) Schnittgut nach rechts zur Mähbalkenmitte hin fördern, und die beiden äußersten Mähscheiben (5a, 5b) und die zugehörigen Fördertrommeln (50) an einem rechten Ende des Mähbalkens (4) ebenfalls gleichsinnig zueinander rotatorisch antreibbar sind derart, dass die Fördertrommeln (50) Schnittgut nach links zur Mähbalkenmitte hin fördern.

5. Landwirtschaftliche Mähmaschine nach einem der vorhergehenden Ansprüche, wobei der nach vorne abknickende und/oder nach vorne gebogene Balkenendabschnitt (4l, 4r) an zumindest einem Ende des Mähbalkens (4) gegenüber einem Mittelabschnitt (4m) des Mähbalkens (4) einen Winkel (β) einschließt, der 140° bis 170° oder 150° bis 165° oder 155° bis 165° beträgt, wobei der genannte Winkel (β) durch eine virtuelle Linie (4V), die durch die Rotationsachse der äußersten Mähscheibe (5a) an dem nach vorne abgeknickten und/oder nach vorne gebogenen Balkenendabschnitt (4l, 4r) und die Rotationsachse der dazu benachbarten, zweitäußersten Mähscheibe (5b) geht, und eine virtuelle Linie (4V), die durch die Rotationsachsen der Mähscheiben (5) an dem Mittelabschnitt (4m) des Mähbalkens (4) geht, definiert ist.

6. Landwirtschaftliche Mähmaschine nach einem der vorhergehenden Ansprüche, wobei die an dem nach vorne abknickenden und/oder nach vorne gebogenen Endabschnitt angeordnete äußerste Mähscheibe (5a) zur benachbarten, zweitäußersten Mähscheibe (5b) einen Versatz (V) in Fahrtrichtung (F) aufweist, der zwischen 25% und 75% oder 30% bis 60% des Abstands der beiden Rotationsachsen der beiden genannten äußersten und zweitäußersten Mähscheiben (5a, 5b) voneinander beträgt.

7. Landwirtschaftliche Mähmaschine nach einem der vorhergehenden Ansprüche, wobei der Mittelabschnitt (4m) des Mähbalkens (4) mindestens doppelt so lang ist wie der nach vorne abgeknickte und/oder nach vorne gebogene Balkenendabschnitt (4l, 4r) und/oder mindestens doppelt so viele Mähscheiben (5) trägt wie der genannte nach vorne abgeknickte und/oder nach vorne gebogene Balkenendabschnitt (4l, 4r).

8. Landwirtschaftliche Mähmaschine nach einem der vorhergehenden Ansprüche, wobei der von einer Antriebsquelle, beispielsweise einer Schlepperzapfwelle, kommende Antriebsstrang (8), in Arbeitsstellung betrachtet, von oben her kommend zum Mähbalken (4) geführt ist und an den untenliegenden, sich entlang des Mähbalkens (4) erstreckenden Abschnitts des Antriebsstrangs (8u) im Bereich einer zweitäußersten oder drittäußersten Mähscheibe (5b, 5c) angeschlossen ist, wobei der untenliegende Antriebsstrang (8u), der sich entlang des Mähbalkens (4) erstreckt, an eine aufrechten Antriebswelle (53), die sich durch die Fördertrommel (50) der zweitäußersten Mähscheibe (5b) hindurch erstreckt, oder über ein Zwischenstirnrad an eineaufrechte Antriebswelle (53) angeschlossen ist, die sich in Fahrtrichtung (F) betrachtet hinter der Fördertrommel (50) der äußersten Mähscheibe (5a) und quer zur Fahrtrichtung (F) betrachtet zwischen den Drehachsen der äußersten und zweitäußersten Mähscheiben (5a, 5b) erstreckt.

9. Landwirtschaftliche Mähmaschine nach einem der vorhergehenden Ansprüche, wobei im Bereich des Endabschnitts des den Mähbalken (4) tragenden Maschinenrahmens (2) ein Winkelgetriebe (27) vorgesehen ist, das quer zur Fahrtrichtung (F) gegenüber der Drehachse der äußersten Mähscheibe (5a) des Mähbalkens (4) nach innen versetzt, insbesondere in einem Bereich oberhalb der zweitäußersten Mähscheibe (5b), angeordnet ist, wobei an das genannte Winkelgetriebe (27) eine Gelenkwelle (54) zum Antreiben des Winkelgetriebes (27) von einer Antriebswelle her angeschlossen ist.

10. Landwirtschaftliche Mähmaschine nach dem vorhergehenden Anspruch, wobei die genannte Gelenkwelle (54) in Arbeitsstellung des Mähbalkens (4) von dem Winkelgetriebe (27) aus über den nach vorne abgeknickten und/oder nach vorne gebogenen Balkenendabschnitt (5l, 5r) hinweg geführt ist.

11. Landwirtschaftliche Mähmaschine nach einem der vorhergehenden Ansprüche, wobei der den Mähbalken (4) tragende Maschinenrahmen (2) kürzer ist als der Mähbalken (4), wobei der Mähbalken (4) mit seinem zumindest einen nach vorne abgeknickten und/oder nach vorne gebogenen Balkenendabschnitt (4l, 4r) quer zur Fahrtrichtung (F) über den Maschinenrahmen (2) hinaus auskragt.

12. Landwirtschaftliche Mähmaschine nach dem vorhergehenden Anspruch, wobei sich der Maschinenrahmen (2) über dem Mähbalken (4) nur bis zu den jeweils zweitäußersten Mähscheiben (5b) erstreckt, wobei der Mähbalken (4) an dem Maschinenrahmen (2) durch zwei Haltestiele (20) aufgehängt ist, die an dem Mähbalken (4) im Bereich der zweitäußersten Mähscheiben (5b) befestigt ist, insbesondere im Bereich einer Mähbalkenhinterkante.

13. Landwirtschaftliche Mähmaschine nach einem der vorhergehenden Ansprüche, wobei nachlaufend zu dem Mähbalken (4) zumindest ein Folgeaggregat (40), insbesondere in Form eines Konditionierers und/oder Querförderers, vorgesehen ist, wobei das Folgeaggregat (40) eine geringere Arbeitsbreite als der Mähbalken (4) aufweist und der zumindest eine nach vorne abknickende und/oder nach vorne gebogene Balkenendabschnitt (4l, 4r) des Mähbalkens (4) eine Arbeitsbahn überstreicht, die seitlich neben und außerhalb der Arbeitsbahn des Folgeaggregats (40) liegt.

14. Landwirtschaftliche Mähmaschine nach einem der vorhergehenden Ansprüche, wobei zusätzlich zum Mähbalken (4) zumindest eine Mähtrommel (11) vorgesehen ist, die relativ zum Mähbalken (4) um eine in Arbeitsstellung aufrechte Schwenkachse (10) verschwenkbar ist und quer zur Fahrtrichtung (F) neben der äußersten Mähscheibe (5a) des Mähbalkens (4) angeordnet sowie durch Verschwenken um die Schwenkachse (10) relativ zu der äußersten Mähscheibe (5a) in Fahrtrichtung (F) wahlweise mehr oder weniger nach vorne versetzt positionierbar ist.

15. Landwirtschaftliche Mähmaschine nach dem vorhergehenden Anspruch, wobei der Antriebsstrang (8) einen obenliegenden Strangabschnitt (8o) aufweist, der sich zwischen der Drehachse einer Mähscheibe (5) des Mähbalkens (4) und der Drehachse der zusätzlichen, verschwenkbaren Mähtrommel (11) erstreckt und durch aufrechte Verbindungswellen einerseits mit der genannten Mähtrommel (11) und andererseits mit einem untenliegenden Strangabschnitt (8u) zum Antreiben der Mähscheiben (5) des Mähbalkens (4) antriebsverbunden ist, wobei eine der beiden genannten Verbindungswellen (12) zumindest näherungsweise koaxial zur Drehachse der Mähtrommel (11) und die andere der beiden genannten Verbindungswellen (13) zumindest näherungsweise koaxial zur Drehachse der äußersten Mähscheibe (5a) am nach vorne abknickenden und/oder nach vorne gebogenen Balkenendabschnitts (4r) des Mähbalkens (4) angeordnet sind, wobei die genannte andere Verbindungswelle zumindest näherungsweise koaxial zur Schwenkachse (10), um die die zusätzliche Mähtrommel (11) verschwenkbar ist, angeordnet ist und sich durch die Fördertrommel (50) der genannten äußersten Mähscheibe (5a) des Mähbalkens (4) hindurch erstreckt.
